# EUROPÄISCHE PATENTSCHRIFT

(11) **EP 0 991 536 B1**
(45) Veröffentlichungstag und Bekanntmachung des Hinweises auf die Patenterteilung: **12.06.2002**
(21) Anmeldenummer: 99929021.6
(22) Anmeldetag: 23.04.1999
(51) Int. Cl.: B60H 1/00

(54) **FAHRZEUGKLIMAANLAGE UND DEREN VERWENDUNG**
VEHICLE AIR CONDITIONING SYSTEM AND THE USE THEREOF
CONDITIONNEUR D'AIR POUR VEHICULE ET SON UTILISATION

(30) Priorität: 25.04.1998 DE 19818649
(43) Veröffentlichungstag der Anmeldung: 12.04.2000
(73) Patentinhaber: Dienhart, Bernd, 50935 Köhln (DE)
(72) Erfinder: Dienhart, Bernd, 50935 Köhln (DE)
(74) Vertreter: Drömer, Hans-Carsten, Dipl.-Ing.
(86) Internationale Anmeldenummer: DE9901227
(87) Internationale Veröffentlichungsnummer: WO9955544

(56) Entgegenhaltungen:
- DE-A- 3 635 353
- DE-A- 3 820 811
- DE-A- 4 124 888
- DE-A1- 3 443 899

## Beschreibung

Die Erfindung betrifft eine Fahrzeugklimaanlage gemäß dem Oberbegriff des Anspruchs 1 sowie ein Verfahren zur Temperierung einer kühlmittels eines Antriebs aggregats.

Aus der **WO 95124323** und der **WO 95/24324** ist eine Fahrzeugkllmaanlage mit einem Kältemittelkreislauf bestehend aus einem Kondensator, einem Expansionsorgan, einem Verdampfer und einem Kompressor bekannt, bei der der Kondensator über eine Bypassleitung überbrückbar ist. Die Bypassleitung ist über ein Bypassventil öffen- und schließbar. Bei geschlossener Bypassleitung arbeitet die Klimaanlage im bekannten Kühlmodus, wobei der Verdampfer zur Abkühlung der in den Fahrzeuginnenraum zugeführten Luft dient. Bei geöffneter Bypassleitung ist der Kondensator zusammen mit einem Kältemittelsammler überbrückt. In dieser Betriebsweise strömt das Kältemittel lediglich durch den Kompressor und den Verdampfer. Im Kompressor wird das Kältemittel durch die Komprimierung erwärmt und die erzeugte Wärme wird am Verdampfer an die dem Fahrzeuginnenraum zugeführte Luft abgegeben, so daß die Klimaanlage in einem Heizmodus arbeitet. Das Kältemittel befindet sich dabei in dem gesamten Kreislauf in einem gasförmigen Zustand. In dieser Betriebsart arbeitet die Klimaanlage als Zusatzheizung um in der Warmlaufphase eines Antriebsaggregats, wenn dieses noch nicht genügend Wärme zur Aufheizung des Fahrzeuginnenraums liefern kann, zusätzliche Wärme bereitzustellen.

In der DE 36 35 353 A1 ist eine Klimaanlage für ein Kraftfahrzeug mit zwei alternativen Wegen des Kältemittels beschrieben. Bei einem ersten, herkömmlichen Weg fließt das Kältemittel der Reihe nach durch einen Kompressor, einen Kondensator, ein Expansionsventil und einen Verdampfer, an welchem ein Wärmeaustausch des Kältemittels mit der dem Fahrgastinnenraum zugeführten Luft stattfindet. Das hinter dem Expansionsventil durch Ausdehnung abgekühlte Kältemittel nimmt im Verdampfer Wärme aus der durchströmenden Luft auf und kühlt diese somit. Die vom Kältemittel aufgenommene Wärme wird hinter dem Kompressor im Kondensator wieder abgegeben. Alternativ kann das Kältemittel durch Umstellung entsprechender Ventile auch vom Kompressor direkt in den Innenraumluft-Wärmetauscher, von dort über ein zweites Expansionsventil in einen zweiten Wärmetauscher und anschließend zurück zum Kompressor geführt werden. Der zweite Wärmetauscher steht dabei im Austausch mit einem Kühlmittel der Brennkraftmaschine. Das hinter dem zweiten Expansionsventil durch Ausdehnung abgekühlte Kältemittel entzieht im zweiten Wärmetauscher dem Kühlmittel der Brennkraftmaschine Wärme, die nach Durchlaufen des Kompressors im Innenraumluft-Wärmetauscher wieder abgegeben wird. Bei der Strömung über den zweiten Weg bewirkt die Klimaanlage somit eine Heizung der Luft des Fahrgastinnenraumes, wobei die hierfür nötige Energie dem Kühlmittel der Brennkraftmaschine entzogen wird. Damit soll insbesondere ein schnelles Aufheizen des Fahrgastinnenraumes unmittelbar nach dem Starten der Brennkraftmaschine erreicht werden.

Ausgehend von diesem Stand der Technik ist es Aufgabe der Erfindung, eine verbesserte Fahrzeugklimaanlage bereitzustellen, die während der Warmlaufphase des Antriebsaggregats besser nutzbar ist.

Diese Aufgabe wird gelöst durch eine Fahrzeugklimaanlage mit den Merkmalen des Anspruchs 1 und mit einem Verfahren zur Temperierung einer kühlmittels eines Antriebs aggregats mit den Merkmalen des Anspruchs 4.

Erfindungsgemäß ist im Kältemittelkreis ein Wärmetauscher angeordnet, der einerseits vom Kältemittel und andererseits von einem Kühlmittel eines Antriebsaggregats beaufschlagbar ist. In dieser Ausgestaltung kann die durch Komprimierung des Kältemittels in dem Kompressor erzeugte Wärme auf das Kühlmittel übertragen werden und somit das Antriebsaggregat schneller erwärmt werden. Dadurch kann eine kürzere Aufheizphase des Motors erreicht werden, was für zukünftige Abgasnormen, nach denen zur Ermittlung der Schadstoffemission des Motors auch die Aufheizphase des Motors mit einbezogen worden muß, besonders wichtig ist.

Vorteilhafterweise ist während der Aufheizphase des Kühlmittels der Kondensator der Klimaanlage über die Bypassleitung überbrückt, so daß die im Kompressor erzeugte Wärme entweder ausschließlich in dem Wärmeüberträger auf das Kühlmittel übertragen wird oder bei steigender Kühlmitteltemperatur zumindest ein Teil der Wärme auf das Kühlmittel und ein restlicher Teil durch den Verdampfer der Klimaanlage auf die durch den Verdampfer strömende Luft zur Beheizung des innenraums übertragen wird. Durch die zusätzliche Aufheizung der Luft durch den Verdampfer ergibt sich an einem dem Verdampfer nachgeordnetem Heizungswärmetauscher eine geringere Wärmeabgabe von dem Kühlmittel an die aufzuheizende Luft und insgesamt eine schnellere Aufheizung des Motors und des Fahrzeuginnenraumes.

Erfindungsgemäß ist der Wärmetauscher im Kältekreis zwischen dem Kompressor und dem Kondensator, also in Strömungsrichtung nach dem Kompressor angeordnet. Dadurch ist gewährleistet, daß die im Kompressor erzeugte Wärme unmittelbar dem Wärmetauscher zugeführt wird.

In einer Ausgestaltung der Erfindung Ist der Wärmetauscher unmittelbar am Antriebsaggregat angeordnet, um das Aufheizverhalten des Motors zu verbessern.

In einer weiteren Ausgestaltung der Erfindung ist eine zweite Bypassleitung mit einem zweiten Bypassventil vorgesehen, um den Wärmetauscher zu überbrücken. Dann kann die Klimaanlage im konventionellen Kühlmodus im wesentlichen unabhängig von dem Kühlmittelkreislauf arbeiten, wenn beispielsweise der Motor seine Betriebstemperatur erreicht hat und keine zusätzliche Wärmezufuhr benötigt.

Im folgenden wird die Erfindung anhand eines Ausführungsbeispiels unter Bezugnahme auf die Zeichnung im einzelnen erläutert.

In der Zeichnung zeigen:
- Fig. 1: ein schematisches Blockschaltbild einer erfindungsgemäßen Fahrzeugklimaaniage zusammen mit einem Kühlkreislauf;
- Fig. 2: ein Druck-Enthalpie Diagramm des Kältemittels für unterschiedliche Prozesse.

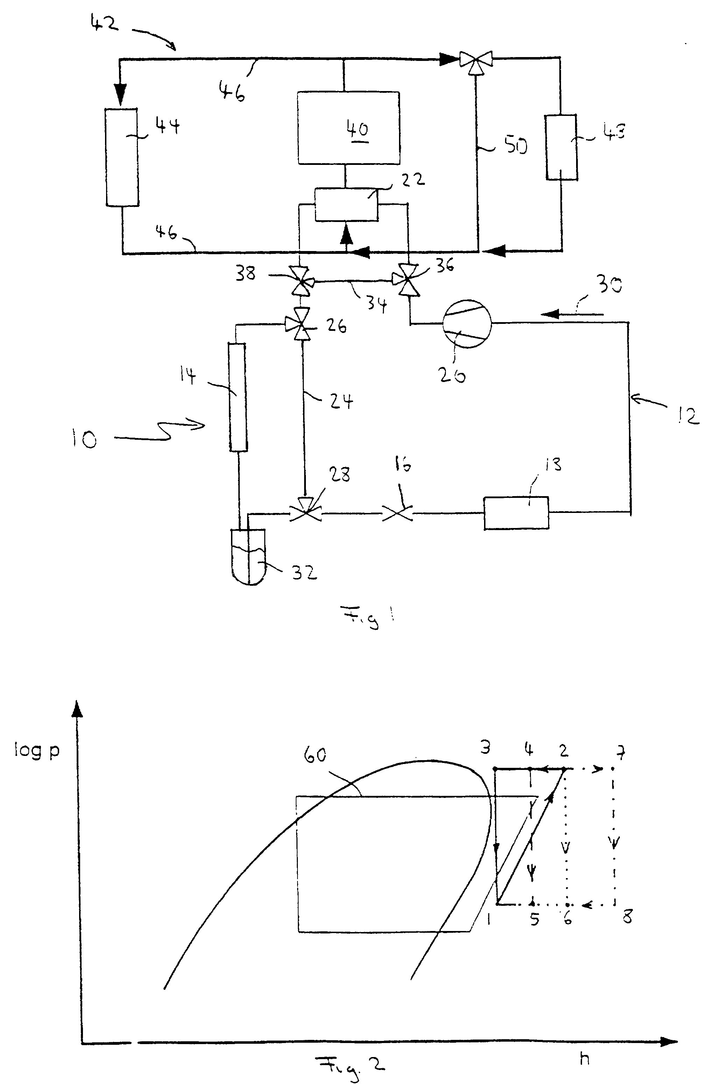

Eine erfindungsgemäße, in **Fig. 1** in einem Blockschaltbild dargestellte Fahrzeugklimaanlage 10 weist einen Kältemittelkreislauf 12 auf, der aus wenigstens einem Kondensator 14. einem Expansionsorgan 16, einem Verdampfer 18, einem Kompressor 20 und einem Wärmetauscher 22 besteht, die über geeignete Kältemittelleitungen verbunden sind. Parallel zum Kondensator 14 ist eine Bypassleitung 24, die über Bypassventile 26 und 28 öffen- und schließbar ist zur Überbrückung des Kondensators 14, angeordnet. Das Kältemittel durchströmt den Kältemittelkreislauf 12 in Pfeilrichtung 30. Nach dem Verdampfer ist im Kältemittelkreislauf ein Sammler 32 vorgesehen.

Der bevorzugt zwischen dem Kompressor 20 und dem Kondensator 14, bzw. dem Bypassventil 26, angeordnete Wärmetauscher 22, ist bevorzugt über eine Wärmetauscherbypassleitung 34 überbrückbar, die parallel zum Wärmetauscher 22 angeordnet ist und über Wärmetauscherbypassventile 36 und 38 öffen- und schließbar ist.

Der Wärmetauscher 22 ist einerseits vom Kältemittel und andererseits von einem Kühlmittel eines Antriebsaggregats 40 beaufschlagbar, um Wärme zwischen dem Kältemittel und dem Kühlmittel austauschen zu können. Das Kühlmittel ist in einem Kühlkreislauf 42 geführt, der aus einem das Kühlmittel kühlenden Kühler 44 und das zu kühlende Antriebsaggregat 40 besteht, die über Kühlmittelleitungen 46 miteinander verbunden sind. Das Kühlmittel dient in bekannter Weise zur Beheizung eines Fahrzeuginnenraums, wozu ein Heizungswärmetauscher 48 vorgesehen ist, der mit dem Kühlmittel beaufschlagbar ist zu Erwärmung einer dem Fahrzeuginnenraum zugeführten Luft. Wenn weder das Antriebsaggregat 40 noch der Wärmetauscher 48 von dem Kühlmittel durchströmt werden sollen, ist eine Kühlmittelbypassleitung 50 zur Überbrückung des Heizungswärmetauschers 48 und des Antriebsaggregats 40 vorgesehen.

Die erfindungsgemäße Fahrzeugklimaanlage 10 arbeitet in der nachfolgend beschriebenen Weise, wobei insbesondere Bezug genommen wird auf **Fig. 2**:

Wenn die Wärmetauscherbypassleitung 34 geöffnet ist durch entsprechende Stellungen der Wärmetauscherbypassventile 36 und 38, die bevorzugt als 3-Wegeventile ausgebildet sind, und die Bypassleitung 24 geschlossen ist, ist der Wärmetauscher 22 ohne Funktion und es findet kein Wärmetausch zwischen dem Kältemittel und dem Kühlmittel statt. Der Kältemittelkreislauf und der Kühlmittelkreislauf 42 sind voneinander unabhängig und die erfindungsgemäße Klimaanlage 10 arbeitet in bekannter Weise zur Abkühlung einer dem Fahrzeuginnenraum über den Verdampfer 18 zugeführten Luft. Der entsprechende thermodynamische Prozeß des Kältemittels ist in Fig. 2, die ein Druck-Enthalpie Diagramm zeigt, durch die geschlossene Kurve 60 dargestellt.

Beim Kaltstart eines Fahrzeugs kann jedoch die erfindungsgemäße Klimaanlage in der Aufheizphase des Antriebsaggregats zur Temperierung des Kühlmittels des Antriebsaggregats benutzt werden. Dazu wird die Wärmetauscherbypassleitung 34 geschlossen und die Bypassleitung 24 geöffnet, so daß das Kältemittel den Kompressor 20, den Wärmetauscher 22, das Expansionsorgan 16 und den Verdampfer 18 im Kreislauf durchströmt. Da kein Kondensator vorgesehen ist, wird das Kältemittel durch bei der Kompression in dem Kompressor 20 erzeugte Wärme in den gasförmigen Zustand übergehen und im gesamten Kreislauf gasförmig bleiben. Die im Kompressor 20 aufgenommene Wärme wird im Wärmetauscher 22 an das noch kalte Kühlmittel abgegeben. Danach wird das Kältemittel im Expansions-organ 16 expandiert und nach Durchströmen des Verdampfers im Kompressor wieder komprimiert und erwärmt. Im log(p) - h Diagramm wird eine geschlossenen Kurve 1-2-3-1 durchlaufen.

Mit steigender Kühlmitteltemperatur kann immer weniger Wärme im Wärmetauscher 22 vom Kältemittel auf das Kühlmittel übertragen werden. Die noch im Kältemittel nach Durchströmen des Wärmetauschers 22 vorhandene Restwärme wird im Verdampfer 18 an die Luft zur Erwärmung des Fahrzeuginnenraums abgegeben. Im log(p) - h Diagramm wird dann die Kurve 1-2-4-5-1 durchlaufen. Bei weitersteigender Kühlmitteltemperatur wird keine Wärme mehr im Wärmetauscher 22 an das Kühlmittel abgegeben und die gesamte im Kompressor 20 aufgenommene Wärmemenge wird im Verdampfer 18 an die dem Fahrzeuginnenraum zugeführte Luft abgegeben, entsprechend einer im log(p) - h Diagramm dargestellten Prozeßführung 1-2-6-1.

Wenn das Kühlmittel seine Betriebstemperatur erreicht hat, wird im Wärmetauscher 22 - jetzt in umgekehrter Richtung - Wärme vom Kühlmittel auf das Kältemittel übertragen und die gesamte dann im Kältemittel enthaltene Wärmemenge im Verdampfer an die Luft abgegeben, entsprechend einer Prozeßführung 1-2-7-8-1. Ein weiteres Betreiben der Fahrzeugklimaanlage 10 in diesem Betriebsmodus ist dann nicht mehr notwendig.

Insgesamt ist mit der erfindungsgemäßen Fahrzeugklimaanlage 10 und ihrer beschriebenen Verwendung zur Temperierung des Kühlmittels eine Einrichtung geschaffen, mit der eine einfache und schnellere Aufheizung des Antriebsaggregats möglich ist. Das Antriebsaggregat, beispielsweise ein Verbrennungsmotor erreicht dann schneller seine Betriebstemperatur, was zur Reduktion der Schadstoffemis-sion, die in der Aufheizphase des Motors besonders groß ist, führt.

## Patentansprüche

1. Fahrzeugklimaanlage mit einem Kältemittelkreislauf (12) bestehend aus wenigstens einem Kondensator (14), einem Expansionsorgan (16), einem Verdampfer (18) und einem Kompressor (20) und mit einer den Kondensator (14) überbrückenden Bypassleitung (24) und wenigstens einem Bypassventil (26, 28) zum Öffnen und Schließen der Bypassleitung (24),
wobei im Kältemittelkreis (12) ein Wärmetauscher (22) angeordnet ist, der einerseits vom Kältemittel und andererseits von einem Kühlmittel eines Antriebsaggregats (40) beaufschlagbar ist,
**dadurch gekennzeichnet, daß**
der Wärmetauscher (22) im Kältemittelkreis (12) zwischen dem Kompressor (20) und dem Kondensator (14) angeordnet ist.

2. Fahrzeugklimaanlage nach Anspruch 1,
**dadurch gekennzeichnet, daß**
der Wärmetauscher (22) unmittelbar am Antriebsaggregat (40) angeordnet ist.

3. Fahrzeugklimaanlage nach einem der vorhergehenden Ansprüche,
**dadurch gekennzeichnet, daß**
eine Wärmetauscherbypassleitung (34) mit wenigstens einem Wärmetauscherbypassventil (36, 38) vorgesehen ist zum Überbrücken des Wärmetauschers (22).

4. Verfahren zur Temperierung eines Kühlmittels eines Antriebsaggregats (40), bei dem über einen Wärmetauscher (22) einer Klimaanlage (10) durch Komprimierung eines Kältemittels in einem Kompressor (20) erzeugte Wärme von dem Kältemittel auf das Kühlmittel übertragen wird zur schnelleren Aufheizung des Antriebsaggregats (40).

5. Verfahren nach Anspruch 4,
**dadurch gekennzeichnet, daß**
während der Aufheizphase des Kühlmittels ein Kondensator (14) der Klimaanlage (10) überbrückt wird und die im Kompressor (20) erzeugte Wärme entweder ausschließlich in dem Wärmetauscher (22) auf das Kühlmittel oder auch durch einen Verdampfer (18) der Klimaanlage (10) auf die durch den Verdampfer (18) strömende Luft übertragen wird.

## Claims

1. Vehicle air-conditioning system having a refrigerant circuit (12) consisting of at least one condenser (14), one expansion element (16), one evaporator (18) and one compressor (20), and having a bypass line (24) which bypasses the condenser (14) and at least one bypass valve (26, 28) for opening and closing the bypass line (24), a heat exchanger (22) being arranged in the refrigerant circuit (12), which heat exchanger can be subjected to the refrigerant on one side and to a coolant of a drive unit (40) on the other side, **characterized in that** the heat exchanger (22) is arranged in the refrigerant circuit (12) between the compressor (20) and the condenser (14).

2. Vehicle air-conditioning system according to Claim 1, **characterized in that** the heat exchanger (22) is arranged directly adjacent to the drive unit (40).

3. Vehicle air-conditioning system according to one of the preceding claims, **characterized in that** a heat exchanger bypass line (34) with at least one heat exchanger bypass valve (36, 38) is provided for bypassing out the heat exchanger (22).

4. Method for raising the temperature of a coolant of a drive unit (40), in which heat generated by means of a heat exchanger (22) of an air-conditioning system (10) by compressing a refrigerant in a compressor (20) is transferred from the refrigerant to the coolant for more rapid heating of the drive unit (40).

5. Method according to Claim 4, **characterized in that** during the warm-up phase of the coolant, a condenser (14) of the air-conditioning system (10) is bypassed and the heat generated in the compressor (20) is either transferred to the coolant exclusively in the heat exchanger (22) or else is transferred by means of an evaporator (18) of the air-conditioning system (10) to the air flowing through the evaporator (18).

## Revendications

1. Installation de climatisation pour véhicule comprenant un circuit caloporteur (12) se composant d'au moins un condenseur (14), un organe d'expansion (16), un évaporateur (18) et un compresseur (20), et comprenant une conduite de dérivation (24) contournant le condenseur (14) et au moins une soupape de dérivation (26, 28) pour l'ouverture et la fermeture de la conduite de dérivation (24),
dans laquelle un échangeur de chaleur (22) est disposé dans le circuit caloporteur (12), lequel peut être chargé d'une part en fluide caloporteur et d'autre part en réfrigérant d'une unité d'entraînement (40),
**caractérisée en ce que**
l'échangeur de chaleur (22) est disposé dans le circuit caloporteur (12) entre le compresseur (20) et le condenseur (14).

2. Installation de climatisation pour véhicule selon la revendication 1,
**caractérisée en ce que** l'échangeur de chaleur (22) est disposé directement sur l'unité d'entraînement (40).

3. Installation de climatisation pour véhicule selon l'une quelconque des revendications précédentes,
**caractérisée en ce qu'**une conduite de dérivation de l'échangeur de chaleur (34) est prévue avec au moins une soupape de dérivation de l'échangeur de chaleur (36, 38) pour contourner l'échangeur de chaleur (22).

4. Procédé d'équilibrage de la température d'un réfrigérant d'une unité d'entraînement (40), dans lequel la chaleur générée par l'intermédiaire d'un échangeur de chaleur (22) d'une installation de climatisation (10) par la compression d'un fluide caloporteur dans un compresseur (20) est transmise du fluide caloporteur au réfrigérant pour un chauffage plus rapide de l'unité d'entraînement (40).

5. Procédé selon la revendication 4,
**caractérisé en ce que**
pendant la phase de chauffage du réfrigérant, un condenseur (14) de l'installation de climatisation (10) est contourné et la chaleur générée dans le compresseur (20) est transmise soit exclusivement dans l'échangeur de chaleur (22) au réfrigérant, soit par un évaporateur (18) de l'installation de climatisation (10), à l'air s'écoulant à travers l'évaporateur (18).
